Europäisches Patentamt

European Patent Office

Office européen des brevets

(19)

(11) Veröffentlichungsnummer: **0 230 952 B1**

(12) **EUROPÄISCHE PATENTSCHRIFT**

(45) Veröffentlichungstag der Patentschrift: 31.07.91

(51) Int. Cl.⁵: **B64D 11/06**

(21) Anmeldenummer: 87100650.8

(22) Anmeldetag: 19.01.87

(54) **Rückenpolster für einen Fluggastsitz.**

(30) Priorität: 31.01.86 DE 3603017
04.03.86 DE 3607041

(43) Veröffentlichungstag der Anmeldung:
05.08.87 Patentblatt 87/32

(45) Bekanntmachung des Hinweises auf die
Patenterteilung:
31.07.91 Patentblatt 91/31

(84) Benannte Vertragsstaaten:
AT BE CH DE ES FR GB IT LI LU NL SE

(56) Entgegenhaltungen:
DE-A- 3 507 085
US-A- 2 319 690
US-A- 2 421 851
US-A- 2 552 039
US-A- 4 527 832

(73) Patentinhaber: METZELER SCHAUM GMBH
Donaustrasse 51
W-8940 Memmingen(DE)

(72) Erfinder: Fenske, Jürgen W.
Dörflerstrasse 8
W-8940 Memmingen(DE)
Erfinder: Steyrer, Ludwig
Anrafferstrasse 8
W-3590 Bad Wildungen(DE)
Erfinder: Eble, Michael
Alte Strasse 10
W-7900 Ulm(DE)

(74) Vertreter: Michelis, Theodor
Seibert + Michelis Rechtsanwälte und Patentanwälte Tattenbachstrasse 9
W-8000 München 22(DE)

Rank Xerox (UK) Business Services

## Beschreibung

Die Erfindung betrifft ein Rückenpolster für einen Fluggastsitz in flammhemmender Ausführung aus Polyurethan-Schaumstoff.

Derartige Rückenpolster in flammhemmender Ausführung sind beispielsweise in der älteren Patentanmeldung P 35 07 085.4 bereits vorgeschlagen worden. Dabei ist ein entsprechendes Polsterteil aus herkömmlichem, unbehandeltem Schaumstoff zumindest auf den von den Sitzgestellteilen nicht abgedeckten Flächen mit einer flammhemmend ausgerüsteten Polyurethan-Schaumstoffolie verkleidet. Bei einem derartigen Sitzpolster, bei dem lediglich herkömmliches Kernmaterial mit einer entsprechend behandelten Folie umhüllt ist, muß für den Brandfall diese umhüllende Schaumstoffolie so ausgerüstet sein, daß sie auch das darunter liegende Kernmaterial schützt. Das bedeutet, daß die Schaumstoffolie mit einem sehr hohen Anteil flammhemmender Mittel getränkt werden muß, wodurch sich einmal das Gewicht erhöht und zum anderen aber auch die Gebrauchstüchtigkeit durch eine hohe Stauchhärte und eine geringere Dauerelastizität vermindert wird.

Demgegenüber liegt der vorliegenden Erfindung die Aufgabe zugrunde, ein Rückenpolster für einen Fluggastsitz zu schaffen, das einerseits in erhöhtem Maße flammwidrig, andererseits aber auch vom Gewicht her leichter ist und eine individuelle Komforteinstellung entsprechend der jeweiligen partiellen Belastung des Polsters ermöglicht.

Zur Lösung dieser Aufgabe ist erfindungsgemäß vorgesehen, daß das Rückenpolster in vollem Volumen aus flammhemmend ausgerüstetem Schaumstoff besteht und zumindest im belasteten Bereich parallel zur Belastungsrichtung verlaufende Ausnehmungen aufweist, die im jeweils gleichen Abstand von der Polsteroberfläche enden.

Durch die Herstellung eines derartigen Rückenpolsters vollständig aus flammhemmend ausgerüstetem Schaumstoff ist somit nur eine erheblich geringere Tränkung des Schaumstoffes in der Größenordnung von 250 bis 350 Gew.-% erforderlich, wodurch sich schon von daher eine Gewichtsreduzierung des Rückenpolsters ergibt. Durch die Anordnung von Ausnehmungen, die zylindrische Form aufweisen, oder aber aus parallel zueinander verlaufenden und sich zumindest über einen Teilbereich quer über den Rücken erstreckenden, nutförmigen Einschnitten bestehen können, ergibt sich darüber hinaus eine weitere Gewichtsreduzierung und ferner die Möglichkeit einer individuellen Komforteinstellung des Rückenpolsters.

Die Ausnehmungen können dabei zur Rückseite des Polsters hin offen oder mit einer weiteren flammhemmend ausgerüsteteten Schaumstoffschicht abgedeckt sein.

Zur Herstellung des Rückenpolsters kann eine auf der Oberseite entsprechend der gewünschten Rückenkontur profilierte Schaumstoffplatte mit durchgehenden zylindrischen Ausnehmungen vorgesehen sein, die mit einer glatten, durchgehenden Schaumstoffplatte konstanter Dicke auf seiner Oberfläche abgedeckt ist.

Eine besonders günstige Gestaltung ergibt sich, wenn drei gesonderte, individuell gewölbte und mit quer verlaufenden, nutförmigen Einschnitten versehene Polsterteile für den Lenden-, Schulter- und Kopfbereich vorgesehen und diese auf einer durchgehenden, getränkten Schaumstoffbahn festgelegt sind.

Die flammwidrige Ausrüstung des Schaumstoffes erfolgt zweckmäßigerweise durch eine Tränkung mit in Chloroprenlatexbinder enthaltenem Aluminiumoxidhydrat und Antimontrioxid, wobei das Rohgewicht des getränkten Schaumstoffes dann etwa 60 bis 80 kg/m$^3$ beträgt.

Anhand einer schematischen Zeichnung sind Aufbau und Wirkungsweise von Ausführungsbeispielen nach der Erfindung näher erläutert. Dabei zeigen

Fig. 1     einen Längsschnitt durch ein Rückenpolster mit nutenförmigen Einschnitten,

Fig. 2     einen Längsschnitt durch ein ähnliches Polster mit zylindrischen Ausnehmungen und einer Abdeckung durch eine geschlossene Schaumstoffbahn,

Fig. 3     eine Ansicht von hinten auf das Rückenpolster nach Fig. 2,

Fig. 4     einen Längsschnitt durch ein Rückenpolster mit einzelnen Polsterteilen und

Fig. 5     einen Querschnitt durch das Rückenpolster entsprechend der Schnittlinie V-V nach Fig. 4.

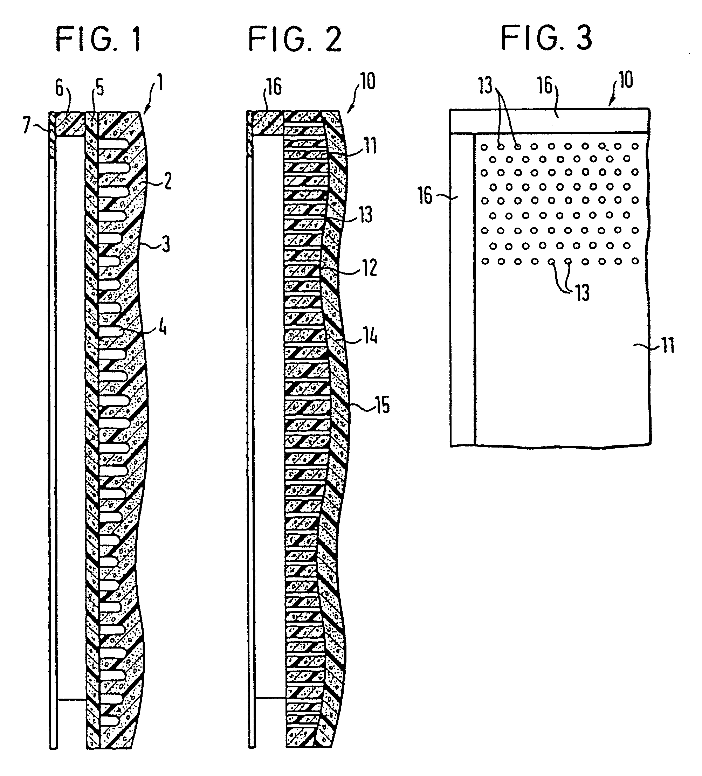

Wie aus Fig. 1 zu ersehen ist, weist das Rückenposlter 1 im wesentlichen eine flammhemmend ausgerüstete Schaumstoffplatte 2 mit einer der gewünschten Rückenkontur gewölbten Oberfläche 3 auf, in die von der Rückseite her nutenförmige Einschnitte 4 parallel zueinander und sich annähernd über die gesamte Breite des Rückenpolsters 1 erstreckend eingelassen sind. Diese Einschnitte 4 enden alle im gleichen Abstand von der Oberfläche 3 des Rückenpolsters 1, so daß oberhalb des von den Einschnitten 4 durchsetzten Bereiches der Schaumstoffplatte 2 eine Schaumstoffschicht konstanter Dicke ohne Durchbrechungen vorhanden ist.

Auf der Rückseite der Schaumstoffplatte 2 verläuft eine weitere durchgehende Schaumstoffschicht 5, die die Einschnitte 4 abdeckt. Das Rückenpolster 1 weist dann noch auf der Rückseite eine umlaufende Randleiste 6 aus Schaumstoff und ggf. eine weitere dünne Schaumstoffbahn 7 auf, womit das fertige Rückenpolster 1 dann auf einfache Weise über das Lehnengestell des Fluggastsitzes gezogen werden kann.

Eine andere Möglichkeit des Aufbaus und der Gestaltung eines darartigen Rückenpolsters ist in Fig. 2 dargestellt. Danach besteht das Rückenpolster 10 ebenfalls aus einer dickeren Schaumstoffplatte 11 mit einer der gewünschten Rückenlinie entsprechenden Oberflächenkontur 12. Diese Schaumstoffplatte 11 weist nunmehr durchgehende zylindrische Ausnehmungen 13 auf, die unterschiedlichen Durchmesser und/oder unterschiedlichen Abstand voneinander aufweisen können. Die Oberfläche 12 dieser mit durchgehenden Ausnehmungen 13 versehenen Schaumstoffplatte 11 ist dann mit einer glatten Schaumstoffbahn 14 konstanter Dicke abgedeckt, so daß sich auch hier eine glatte Oberfläche 15 ergibt.

Wie man aus der Ansicht von hinten auf dieses Rückenpolster 10 entsprechend Fig. 3 ersieht, liegen die zylindrischen Ausnehmungen 13, die bei dem hier dargestellten Ausführungsbeispiel nach hinten offen sind, relativ dicht nebeneinander und erstrecken sich über die gesamte Fläche des Rükkenpolsters. Schließlich ist aus Fig. 3 auch noch die Lage und Anordnung der Randleisten 16 entsprechend Fig. 1 zu erkennen.

Durch die entsprechende Wahl der Größe, Tiefe und Abstand der Einschnitte 4 und der zylindrischen Ausnehmungen 13 können damit in optimaler Weise einmal das Gewicht des Rückenpolsters reduziert und zum anderen eine individuelle Härte und damit ein individueller Komfort des Rückenpolsters in unterschiedlichen Bereichen eingestellt werden, wodurch sich trotz Verwendung eines einheitlichen Schaummaterials die gleichen Vorteile wie bei Verwendung eines Mehrzonenschaums ergeben. Neben einer insgesamt weicheren Gestaltung des Rückenkissens gegenüber einer kompakten Ausführung ergibt sich darüber hinaus noch ein erheblich verbessertes Sitzklima aufgrund höherer Luftdurchlässigkeit des Polsters.

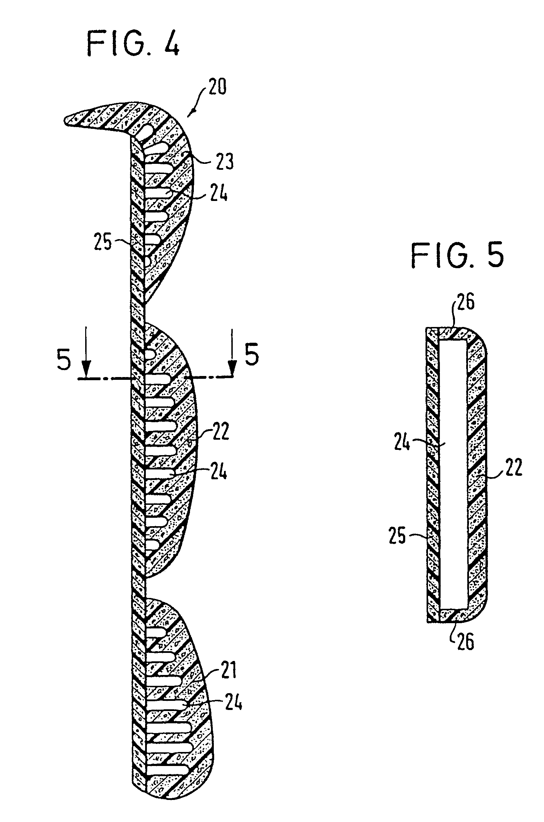

Eine besonders günstige Gestaltung eines Rückenpolsters ergibt sich bei einem Aufbau entsprechend dem in Fig. 4 und 5 gezeigten Ausführungsbeispiel. Hiernach weist das Rückenpolster 20 drei getrennte und individuell gewölbte bzw. geformte Polsterteile 21, 22 und 23 auf, die entsprechend ihrer Anordnung zur Abstützung von Lenden-, Schulter- und Kopfbereich dienen. Alle drei Polsterteile 21, 22 und 23 sind ebenfalls mit nutenförmigen Einschnitten 24 versehen, die jeweils im gleichen Abstand von der Oberfläche der einzelnen Polsterteile enden. Diese drei Polsterteile 21, 22 und 23 sind über eine durchgehende Schaumstoffplatte 25 miteinander verbunden, über die das Rückenpolster 20 dann an dem Lehnengestell festgelegt werden kann.

Wie man aus dem Querschnitt nach Fig. 5 ersieht, ist das Polsterteil 22 und damit die nutenförmigen Einschnitte 24 seitlich mit entsprechend abgerundeten Schaumstoffstreifen 26 abgedeckt. Eine derartige seitliche Abdeckung ist selbstverständlich auch bei den Rückenpolstern 1 und 10 entsprechend den Fig. 1 und 2 möglich.

Als Grundmaterial wird zweckmäßigerweise ein Polyether-Polyurethan-Blockschaum mit einem Raumgewicht von etwa 25 kg/m³ verwendet. Dieser Schaumstoff wird dann getränkt mit einer flammhemmenden Verbindung aus z.B. 60 bis 70 % Aluminiumoxidhydrat, 2 bis 3 % Antimontrioxid sowie 30 bis 40 % Chloroprenlatex als Binder und den üblichen Stabilisatoren. Die Tränkung erfolgt zweckmäßigerweise in einer Menge von 250 bis 350 Gew.-%, bezogen auf das Rohgewicht des unbehandelten Schaumstoffs, so daß sich ein getränkter Schaumstoff mit einem Rohgewicht von etwa 60 bis 80 kg/m³ ergibt.

Die aus dem so getränkten Schaumstoff zugeschnittenen Einzelteile der jeweiligen Rückenpolster werden anschließend mittels eines ebenfalls flammwidrig ausgerüsteten Klebers miteinander verbunden.

Ein derart hergestelltes Rückenpolster wurde nach den neuesten Bestimmungen der US-Luftfahrtbehörde FAA getestet, indem das Polster für zwei Minuten einer Ölbrennerflamme von 1010° C ausgesetzt wurde, was einer Strahlungsintensität von 10,5 W/cm² an der Oberfläche entspricht. Der anschließend gemessene Gewichtsverlust betrug lediglich 2 % und liegt damit wesentlich unter dem zulässigen Gewichtsverlust von 10 %. Es trat weder ein Weiterglimmen auf noch erfolgte ein Abtropfen von Schaumstoffschmelzen. Es zeigte sich, daß dieser flammhemmend ausgerüstete Schaumstoff im Bereich der Beflammung vollständig karbonisiert war und damit eine optimale thermische Isolierschicht gegen Weiterbrennen oder Weiterglimmen bildet.

Weitere Tests haben ergeben, daß derartig ausgerüstete und aufgebaute Rückenpolster keinerlei Einbußen an Sitzkomfort und der erforderlichen Luftdurchlässigkeit gegenüber herkömmlichen Polsterungen aufweisen.

Bei ensprechender Schaumstoffwahl sowie Anordnung und Ausbildung der Ausnehmungen kann das beschriebene Konstruktionsprinzip auch für die Sitzpolster angewendet werden.

**Patentansprüche**

1. Rückenpolster für einen Fluggastsitz in flammhemmender Ausführung aus Polyurethan-Schaumstoff, dadurch gekennzeichnet, daß das Rückenpolster (1; 10; 20) im vollen Volumen aus flammhemmend ausgerüstetem Schaumstoff besteht und zumindest im belasteten Bereich parallel zur Belastungsrichtung verlaufende Ausnehmungen (4; 13; 24) aufweist, die in jeweils gleichem Abstand von der Polsteroberfläche (10; 15) enden.

2. Rückenpolster nach Anspruch 1, dadurch gekennzeichnet, daß die Ausnehmungen (13) zylindrische Form aufweisen und parallel zueinander verlaufen.

3. Rückenpolster nach Anspruch 1, dadurch gekennzeichnet, daß die Ausnehmungen aus parallel zueinander verlaufenden und sich zumindest über einen Teilbereich quer über den Rücken erstreckenden nutenförmigen Einschnitten (4; 24) bestehen.

4. Rückenpolster nach Anspruch 2 oder 3, dadurch gekennzeichnet, daß in unterschiedlichen Bereichen des Rückenpolsters (1; 10; 20) sowohl zylindrische als auch nutenförmige Ausnehmungen (13; 4) vorgesehen sind.

5. Rückenpolster nach Anspruch 2 oder 3, dadurch gekennzeichnet, daß die Ausnehmungen (13) zur Rückenseite des Polsters (10) hin offen sind.

6. Rückenpolster nach Anspruch 2 oder 3, dadurch gekennzeichnet, daß die Ausnehmungen (4; 24) zur Rückseite des Posters (1; 20) mit einer weiteren flammhemmend ausgerüsteten Schaumstoffschicht (5; 25) abgedeckt sind.

7. Rückenpolster nach Anspruch 2 und 5, dadurch gekennzeichnet, daß eine auf der Oberseite (12) profilierte Schaumstoffplatte (11) mit durchgehenden zylindrischen Ausnehmungen (13) vorgesehen ist, die mit einer glatten, durchgehenden Schaumstoffplatte (14) konstanter Dicke abgedeckt ist.

8. Rückenpolster nach Anspruch 1, 3 oder 6, dadurch gekennzeichnet, daß drei gesonderte, individuell gewölbte und mit quer verlaufenden, nutenförmigen Einschnitten (24) versehene Polsterteile (21,22,23) für den Lenden-, Schulter- und Kopfbereich vorgesehen und auf einer durchgehenden, getränkten Schaumstoffplatte (25) festgelegt sind.

9. Rückenpolster nach einem der Ansprüche 1 bis 7, dadurch gekennzeichnet, daß der Schaummstoff flammwidrig ausgerüstet ist durch Tränkung mit in Chloroprenlatexbinder enthaltenem Aluminiumoxidhydrat und Antimontrioxid.

10. Rückenpolster nach Anspruch 9, dadurch gekennzeichnet, daß die Tränkung 250 bis 350 Gew.-%, bezogen auf das Rohgewicht des unbehandelten Schaumstoffs, beträgt.

11. Rückenpolster nach Anspruch 8 oder 9, dadurch gekennzeichnet, daß das Rohgewicht des getränkten Schaumstoffs 60 bis 80 kg/m³ beträgt.

## Claims

1. A back cushion for an aeroplane passenger seat in a flame-resistant connstruction made of polyurethane foam, characterised in that the entire volume of the back cushion (1; 10; 20) is composed of foam having a flame-resistant finish and, at least in the loaded zone, comprises recesses (4; 13; 24) which extend in parallel to the direction of the load and each terminate at the same distance from the cushion surface (10; 15).

2. A back cushion as claimed in Claim 1, characterised in that the recesses (13) are of cylindrical formation and extend in parallel with one another.

3. A back cushion as claimed in Claim 1, characterised in that the recesses comprise groove-like indentations (4; 24) which extend in parallel to one another and extend at least over a sub-zone, extend transversely across the back.

4. A back cushion as claimed in Claims 2 or 3, characterised in that in different zones of the back cushion (1; 10; 20) both cylindrical and groove-like recesses (13; 4) are provided.

5. A back cushion as claimed in Claims 2 or 3, characterised in that the recesses (13) are open to the rear of the cushion (10).

6. A back cushion as claimed in Claims 2 or 3, characterised in that to the rear of the cushion (1; 20) the recesses (4; 24) are covered with a further foam layer (5; 25) having a flame-resistant finish.

7. A back cushion as claimed in Claims 2 and 5, characterised in that a foam sheet (11) profiled on its upper side (12) is provided which contains penetrating cylindrical recesses (13) and is covered by a smooth, solid foam sheet (14) of constant thickness.

8. A back cushion as claimed in Claims 1, 3 or 6, characterised in that three separate, individually curved cushion components (21, 22, 23) comprising transversely extending, groove-like indentations (24) are provided for the lumbar region, shoulder region and head region and are fixed to a solid, saturated foam sheet (25).

9. A back cushion as claimed in one of Claims 1 to 7, characterised in that the foam is provided with a flame-resistant finish in that it is saturated with hydrous aluminium oxide and antimony trioxide contained in a chloroprene latex binding agent.

10. A back cushion as claimed in Claim 9, characterised in that the saturation amounts to 250 to 350% by weight relative to the gross weight of the untreated foam.

11. A back cushion as claimed in Claims 8 or 9, characterised in that the gross weight of the saturated foam amounts to 60 to 80 kg/m³.

**Revendications**

1. Coussin de dossier pour un siège de passager d'avion du type ignifuge, en mousse de polyuréthanne, caractérisé en ce que le coussin de dossier (1; 10; 20) est constitué dans tout son volume d'une manière mousse apprêtée de manière ignifuge et comporte au moins dans la région dans laquelle s'applique la charge, des évidements (4, 13, 24), qui s'étendent Parallèlement à la direction d'application de la charge et qui se terminent à la même distance de la surface du coussin (10, 15).

2. Coussin de dossier suivant la revendication 1, caractérisé en ce que les évidements (13) présentent une forme cylindrique et s'étendent parallèlement les uns aux autres.

3. Coussin de dossier suivant la revendication 1, caractérisé en ce que les évidements sont constitués d'encoches (4; 24) en forme de gorges, s'étendant parallèlement entre elles et, au moins sur une région partielle, transversalement au dossier.

4. Coussin de dossier suivant la revendication 2 ou 3, caractérisé en ce qu'il est prévu dans des parties différentes de dossier (1; 10; 20) à la fois des évidements cylindriques et des évidements en forme de gorges (13; 4).

5. Coussin de dossier suivant la revendication 2 ou 3, caractérisé en ce que les évidements (13) sont ouverts vers le côté arrière du coussin (10).

6. Coussin de dossier suivant la revendication 2 ou 3, caractérisé en ce que les évidements (4; 24) sont recouverts, du côté arrière du coussin (1; 20) d'une autre couche de matière mousse (5; 25) apprêtée de manière ignifuge.

7. Coussin de dossier suivant la revendication 2 ou 5, caractérisé en ce qu'il est prévu une plaque de matière mousse (11), qui est profilée sur le côté supérieur (12), qui a des évidements (13) cylindriques continus et qui est recouverte d'une plaque de matière mousse (14) lisse, continue et d'épaisseur constante.

8. Coussin de dossier suivant la revendication 1, 3 ou 6, caractérisé en ce qu'il est prévu pour la région lombaire, la région des épaules et la région de la tête, trois parties de coussin (21, 22, 23) distinctes, incurvées individuellement et munies d'encoches (24) en forme de gorges s'étendant transversalement, et ces trois parties sont fixées sur une plaque en matière mousse (25) continue et imprégnée.

9. Coussin de dossier suivant l'une des revendications 1 à 7, caractérisé en ce que la matière mousse est apprêté de manière ignifuge par imprégnation par de l'hydroxyde d'aluminium et du trioxyde d'antimoine contenus dans un liant à base de latex de chloroprène.

10. Coussin de dossier suivant la revendication 9, caractérisé en ce que l'imprégnation est de 250 à 350 % par rapport au poids brut de la matière mousse non traitée.

11. Coussin de siège suivant la revendication 8 ou 9, caractérisé en ce que la masse volumique de la matière mousse imprégnée est comprise entre 60 et 80 kg/m³.

# FIG. 1

# FIG. 2

# FIG. 3

# FIG. 4

20
23
24
25
5 5
22
24
21
24

# FIG. 5

26
24
22
25
26